# EUROPÄISCHE PATENTSCHRIFT

(11) **EP 1 317 860 B1**
(45) Veröffentlichungstag und Bekanntmachung des Hinweises auf die Patenterteilung: **20.02.2013**
(21) Anmeldenummer: 01980163.8
(22) Anmeldetag: 12.09.2001
(51) Int. Cl.: H04L 12/14, H04L 29/06

(54) **VERFAHREN ZUR ERFASSUNG VON BEDARFSTRÄGER-SPEZIFISCHEN ÜBERTRAGUNGSKOSTEN BEI DER DURCHFÜHRUNG VON ÜBERWACHUNGSMASSNAHMEN IN PAKETORIENTIERTEN TELEKOMMUNIKATIONSNETZEN**
METHOD FOR RECORDING CONSUMER-SPECIFIC TRANSMISSION COSTS INVOLVED IN CARRYING OUT MONITORING TASKS IN PACKET-ORIENTED TELECOMMUNICATIONS NETWORKS
PROCEDE POUR SAISIR DE COUTS DE TRANSMISSION SPECIFIQUES A UN OFFICE DEMANDEUR LORS DE L'EXECUTION DE MESURES DE SURVEILLANCE DANS DES RESEAUX DE TELECOMMUNICATION ORIENTES PAQUETS

(30) Priorität: 14.09.2000 DE 10045854; 19.09.2000 DE 10046556
(43) Veröffentlichungstag der Anmeldung: 11.06.2003
(73) Patentinhaber: T-Mobile Deutschland GmbH, 53227 Bonn (DE)
(72) Erfinder: KELLER, Walter, 40880 Ratingen (DE)
(74) Vertreter: Riebling, Peter
(86) Internationale Anmeldenummer: PCT/DE2001/003487
(87) Internationale Veröffentlichungsnummer: WO 2002/023921

(56) Entgegenhaltungen:
- EP-A- 1 014 619
- EP-A- 1 026 853
- WO-A-00/24161
- "UNIVERSAL MOBILE TELECOMMUNICATIONS SYSTEM (UMTS); 3G SECURITY; LAWFUL INTERCEPTION ARCHITECTURE AND FUNCTIONS (3G TS 33.107 VERSION 3.0.0 RELEASE 1999)" ETSI TECHNCAL SPECIFICATION, [Online] Januar 2000 (2000-01), Seite 1-55 XP002214517 Gefunden im Internet: <URL:www.etsi.org> [gefunden am 2002-09-24]

## Beschreibung

Die Erfindung betrifft ein Verfahren zur Erfassung von Bedarfsträger-spezifischen Übertragungskosten bei der Durchführung von Überwachungsmaßnahmen in paketorientierten Telekommunikationsnetzen, beispielsweise in GPRS- (General Packet Radio Service) oder UMTS- (Universal Mobile Telecommunication Service) Mobilfunknetzen, nach dem Oberbegriff des Patentanspruchs 1.

### Stand der Technik, Probleme u. Nachteile

Die prinzipielle Verfahrensweise zur Durchführung von Teilnehmer-Überwachungsmaßnahmen in Telekommunikationsnetzen ist in ETSI GSM 03.33 (Tdoc SMG10 98 D047), Version 0.6.1, July 1998, beschrieben. In der Bundesrepublik Deutschland erfolgt die Überwachung von Telekommunikationsdiensten gemäß Grundgesetz Artikel 10, Fernmeldeüberwachungsverordnung (FÜV-1995) sowie gemäß der Umsetzungsregel (TR FÜV), die vom BAPT (jetzt RegTP) erstellt und gepflegt wird.

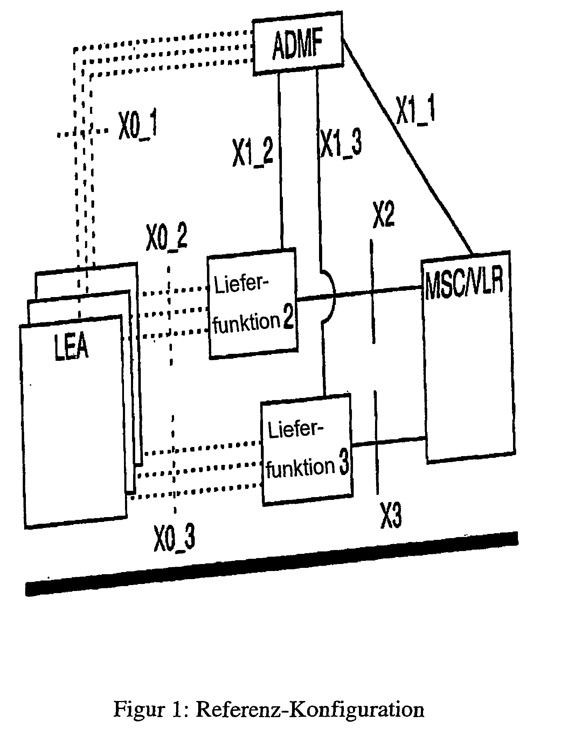

Die prinzipielle Architektur ist in Fig.1 dargestellt (GSM 03.33). MSC ist dabei ein Vermittlungsknoten im GSM-Netz. ADMF stellt die administrative Instanz in Form einer Administrationseinrichtung dar (beispielsweise das' Interception Control Center). LEA sind die Bedarfsträger (Law Enforcement Agencies). Delivery Functions 2 (DF2) und 3 (DF3) sind Lieferfunktionen mit Filtermöglichkeit, die zur Übertragung von Informationen über Art und Umfang der Kommunikation (Schnittstelle X0_2) sowie den Kommunikationsinhalt (Schnittstelle X0_3) dienen. Die Lieferfunktionen bereiten die aus dem Telekommunikationsnetz (hier beispielsweise MSC/VLR) gelieferten Informationen/Daten mit systemspezifischen Schnittstellen gemäß dem erforderlichen Übertragungsverfahren und den Übertragungsanforderungen der LEA auf und sorgen für eine sichere Übertragung. Dabei können Überwachungsmaßnahmen auch optional zu unterschiedlichen Bedarfsträgern durchgeführt werden, so dass die gleichen Daten seitens DF2 und/oder DF3 auch mehrfach zu unterschiedlichen LEA übertragen werden müssen. DF2 und DF3 verfügen dem gemäß über die Möglichkeit zur temporären Speicherung von Daten. Die übertragenen Daten der X0_2-schnittstelle werden gewöhnlich auch mit Intercept Related Information (IRI) sowie die der Schnittstelle X0_3 mit Intercept Data Product (IDP) bezeichnet.

Die funktionale Architektur zur Überwachung von GPRS-und UMTS-Netzen ist in ETSI TS 133 107 V3.00 lawful interception architecture and functions beschrieben. Im Gegensatz zu sprachorientierten Netzen, kann in den paketorientierten Netzen eine Übertragung zum Bedarfsträger beispielsweise mit Internet-Protokoll (IP) erfolgen.

Eine Gebührenerfassung der Schnittstellen X0_2 und X0_3 ist für paketorientierte Netze bisweilen nicht spezifiziert. Hierdurch ist es dem jeweiligen Netzbetreiber nicht möglich, seine Übertragungskosten bei den jeweiligen Bedarfsträgern in Rechnung zu stellen, was insbesondere bei umfangreichen Überwachungsmaßnahmen und umfangreichen IDP-Daten sehr kostenintensiv sein kann.

Aus "Universal Mobile Telecommunication System (UMTS); 3G Security; Lawful Interception Architecture and Functions (3G TS 33.107 version 3.0.0 Release 1999", ETSI Technical Specification, Januar 2000 (2000-01), XP-002214517, ist bezogen auf UMTS eine gleichartige Verfahrensweise wie in ETSI GSM 03.33 beschrieben. In Kapitel 8.4 wird auf die Möglichkeit des "Billings" hingewiesen. Weitere spezifische Ausführungen zu Billingverfahren sind nicht offenbart.

Die EP 1 026 853 A offenbart ein Verfahren zur Abrechnung von Übertragungskosten in einem Telekommunikationssystem, insbesondere ein Verfahren zur Abrechnung von Übertragungskosten, die bei einer Kommunikation bzw. Informationsübertragung zwischen einem Informationsprovider und einem Teilnehmer des Telekommunikationsnetzes anfallen. Hierbei wird unterschieden zwischen einer vom Teilnehmer initiierten Informationsübertragung (Pull-type information transmission) und einer vom Informationsprovider bereitgestellten Informationsübertragung (Push-type information transmission). Je nach Übertragungsart werden von der Übertragungszeit abhängige Abrechnungsverfahren (user billing) oder von dem bereitgestellten Informationsvolumen (IP -billing) abhängige Abrechnungsverfahren angewandt, die in dieser Form auf das erfindungsgemäße Problem nicht anwendbar sind.

Aus der WO 00 24161 A ist ein Verfahren zur "real-time" Abrechnung, insbesondere von sogenannten Prepaid-Diensten in einem paketvermittelten Kommunikationssystem. Insbesondere soll hier die netzwerkübergreifende Abrechnung der Kommunikationsdienste erleichtert werden, indem die Netzknoten unmittelbar Abrechnungsdaten in Form eines angefallenen Gebührenbetrags für die sofortige Abrechnung bereitstellen.

Die EP 1 014 619 A offenbart ein Verfahren zur Abrechnung in Kommunikationsnetzen, wobei die bekannten Arten der Abrechnung in leitungsvermittelten und paketvermittelten Kommunikationsnetzen miteinander kombiniert werden, um eine transparente und unmittelbare Kostenkontrolle einer Kommunikationsverbindung zu ermöglichen, die über beide Kommunikationsnetze geführt wird.

Der Artikel "Policy-Based Billing Architecture for Internet Differentiated Services; in: Proceedings of IFIP Fifth International Conference on Broadband Communications (BC'99), Hong Kong, 10-12 November 1999, offenbart verschiedene Abrechnungsverfahren für Internet-Zusatzdienste. Es werden verschiedene Abrechnungsmodelle, wie Flatrates, zeitdauerbasierte und volumenbasierte Abrechnungsverfahren unterstützt.

### Erfindungsgemäße Aufgabe

Der vorliegenden Erfindung liegt die Aufgabe zugrunde, ein Verfahren vorzuschlagen, auf dessen Basis die Erfassung von Übertragungskosten zu den sog. Bedarfsträgern bei richterlich angeordneten Überwachungsmaßnahmen in paketorientierten Telekommunikationsnetzen möglich ist.

Gelöst wird diese Aufgabe durch die kennzeichnenden Merkmale des Patentanspruchs 1.

Vorteilhafte Ausgestaltungen und Weiterbildungen der Erfindung ergeben sich aus den Unteransprüchen.

### Erläuterung

Die Erfindung wird unter Verwendung von Zeichnungsfiguren, die hier lediglich eine mögliche Ausführungsart am Beispiel des verbreiteten GSM-Netzes (Global System for Mobile communication) in schematischer Darstellung beschreiben, erläutert.

Es zeigt:
- Fig. 1:: Referenzkonfiguration gemäß ETSI GSM 03.33;
- Fig. 2:: Erfindungsgemäßer Transmission Record.

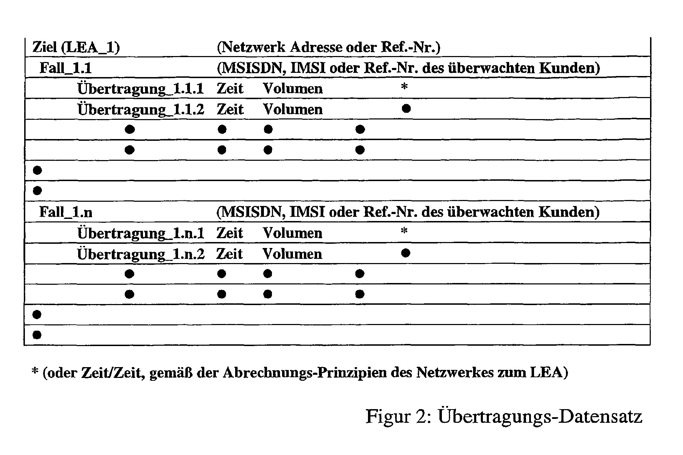

Die Referenzkonfiguration gemäß Fig. 1 wird weiterhin verwendet. Zusätzlich werden jedoch in den Delivery Functions 2 und 3, Zähler zur Erfassung der Datenübertragungsvolumen auf den Schnittstellen X0_2 und X0_3 angeordnet (Fig.2). Diese Zähler werden den einzelnen Überwachungsfällen und/oder den jeweiligen Bedarfsträgern (LEA) zugeordnet. Dadurch ist eine fall- und zielspezifische Erfassung der Datenübertragungsvolumen zu den jeweiligen Bedarfsträgern realisierbar und eine Einzelzuordnung der Übertragungskosten zu den einzelnen Maßnahmen nachweisbar.

Die einzelnen Zähler werden über die Schnittstellen X1_2 und X1_3, angelegt, gelesen und gelöscht und demgemäss zentral in der Administrationseinrichtung administriert, wo dann eine Weiterverarbeitung der Detailinformation für die Vergebührung erfolgt und bedarfsweise eine Schnittstelle zum Billing Center des Netzbetreibers vorhanden ist. Somit sind auch die gebührenspezifischen Detailinformationen der Interception-Maßnahmen sicher gegen unbeabsichtigte Zugriffe geschützt.

Fig.2 zeigt eine bevorzugte Ausführung der Zählertabelle in DF2 und/oder DF3. Da die Informationen zielspezifisch erfasst werden, ist für jeden administrierten LEA eine Transmission Record (Speicherplatz oder Datenbank-Feld) angelegt. Im Beispiel ist diese Zieladresse durch LEA_1 repräsentiert. Der Adressat kann dabei durch seine Netzwerk-Adresse oder eine im System bekannte Referenznummer definiert sein, wobei sich die Netzwerkadresse (X.25, IP-Adresse etc.) anbietet, da sie sowieso im DFx bekannt sein muss.

Unter der Zieladresse werden die administrierten Überwachungsmaßnahmen (Cases) gelistet. Hierbei handelt es sich in der Regel um Kunden des Telekommunikationsnetzes, oder um automatische Endgeräte, die sich eindeutig durch ihre zugeordnete Teilnehmerkennung (beispielsweise die Rufnummer, die Mobilfunk-Rufnummer MSISDN, die Kartennummer IMSI) oder eine Referenznummer unterscheiden. Auch hier bietet sich die Verwendung einer Kennung an, die in der betreffenden DFx bereits zur Übertragung zu den Bedarfsträgern verwendet wird, um Aufwand zu sparen.

Unter der Case-Kennung sind sodann die eigentlichen Übertragungszyklen registriert. Es handelt sich hierbei um Listeneintragungen, die insbesondere Zeitpunkt und Übertragungsvolumen, sowie optional eine fortlaufende Zählnummer beinhalten.

Je nach Abrechnungsart (volumen- oder zeitorientiert), können beide Felder für Start- und Endzeitpunkt der jeweiligen Übertragung verwendet werden. Bei fortlaufender Übertragung kleiner Datenmengen kann optional eine Zusammenfassung von Datenübertragungsvolumen innerhalb bestimmter zeitlicher Intervalle (beispielsweise pro Stunde, pro Tag o.ä.) erfolgen, damit der Einzelgebührennachweis in vertretbarem Umfang bleibt.

Die Felder der Zieladressen und Überwachungsmaßnahmen werden ADMF-seitig angelegt, geändert oder gelöscht. Die Tabelleneinträge für die einzelnen Übertragungen legt die DFx jeweils automatisch an, wobei die Art der erforderlichen Eintragungen wiederum von der ADMF definiert wird. Diese Felder sind ADFS-seitig ebenfalls löschbar.

Die Übertragung der kompletten Datentabellen zur ADMF erfolgt automatisch (Push-Verfahren) oder wahlweise nach Abruf (Polling, bzw. Pull-Verfahren). Zur effizienten Übertragung können optional alle Datenfelder komplette in einem Übertragungszyklus (beispielsweise als FTP-Datei) übertragen werden.

Wenn sich das übertragene Datenvolumen auf der X0_2- und/oder der X0_3-Schnittstelle nur unwesentlich vom netzseitig bereitgestellten Datenvolumen der X2- und/oder der X3-Schnittstelle unterscheidet, so dass die alternative gebührenspezifische Erfassung keinen relevanten Beitrag der Delivery Function 2 und/oder 3 enthält, kann die Erfassung der gebührenrelevanten Übertragungsparameter in alternativer Ausführungsvariante auch im Netzknoten (hier MSC/VLR, im GPRS-Netz beispielsweise im SGSN) erfolgen. Die Administration der gebührenrelevanten Funktionalität sowie die Übertragung der relevanten Kenngrößen erfolgt dann über die X1_1 - Schnittstelle.

## Patentansprüche

1. Verfahren zur Erfassung von Bedarfsträger-spezifischen Übertragungskosten bei der Durchführung von Überwachungsmaßnahmen in paketorientierten Telekommunikationsnetzen, wobei eine administrative Instanz in Form einer Administrationseinrichtung (ADMF) vorgesehen ist, und Lieferfunktionen (DF2, DF3) mit Filtermöglichkeit vorgesehen sind, die eine Übertragung von Informationen über Art und Umfang der Kommunikation über eine Schnittstelle (X0_2) sowie den Kommunikationsinhalt über eine Schnittstelle (X0_3) an einen Bedarfsträger (LEA) vornehmen,
**dadurch gekennzeichnet, dass** im Telekommunikationsnetz übertragungsseitig eine Speichertabelle oder ein Datenbankfeld in Form eines Transmission Records angeordnet ist, das von der Administrationseinrichtung (ADMF) über eine Schnittstelle (X1_2, X1_3) situationsspezifisch definiert, geändert oder gelöscht werden kann und innerhalb dessen die gebührenrelevanten Informationen, in Abhängigkeit vom Zeitpunkt der Übertragung und dem Übertragungsvolumen jeder Übertragung oder den Zeitpunkten von Start und Ende der Übertragung, seitens der übertragenden Einrichtung automatisch erfasst und den entsprechenden Bedarfsträgern (LEA) zugeordneten Zieleintragungen sowie den entsprechenden administrierten Überwachungsmaßnahmen von zu überwachenden Telekommunikationskunden zugeordnet werden, wobei das Transmission Record in Einzelteilen oder wahlweise komplett von der administrativen Einrichtung gelesen oder alternativ dorthin übertragen werden kann.

2. Verfahren gemäß Anspruch 1, **dadurch gekennzeichnet, dass** die gebührenrelevanten Informationen zielspezifisch nach Bedarfsträger (LEA) sowie in untergeordneter Reihenfolge quellenspezifisch nach zu überwachenden Telekommunikationskunden aufgelistet werden.

3. Verfahren gemäß Anspruch 1 und 2, **dadurch gekennzeichnet, dass** als Zielkriterium eine in der Übertragungseinrichtung vorhandene Adresse, Netzwerk-Adresse, X.25- oder IP-Adresse verwendet wird.

4. Verfahren gemäß zumindest einem der Ansprüche 1-3, **dadurch gekennzeichnet, dass** als Quellenkriterium eine in der Übertragungseinrichtung vorhandene Netz-Kennung der überwachten Personen oder Einrichtungen in Form einer Telefonnummer im Festnetz oder einer Mobilfunk-Rufnummer MSISDN in einem GSM-Mobilfunknetz verwendet wird.

5. Verfahren gemäß zumindest einem der Ansprüche 1-4, **dadurch gekennzeichnet, dass** als Quellenkriterium eine in der Übertragungseinrichtung vorhandene Karten-Kennung IMSI einer Chipkarte oder eines Teilnehmeridentitätsmoduls SIM der überwachten Personen oder Einrichtungen verwendet wird.

6. Verfahren gemäß zumindest einem der Ansprüche 1-5, **dadurch gekennzeichnet, dass** die Erfassung der gebührenrelevanten Informationen innerhalb der Delivery Funktions Komponenten DF2 und DF3 erfolgt.

7. Verfahren gemäß zumindest einem der Ansprüche 1-6, **dadurch gekennzeichnet, dass**, unabhängig von der Datenerfassung, in der Administrationseinrichtung ADMF, oder einer daran angeschlossenen Billing-Einrichtung eine Verarbeitung der übertragungsspezifischen und gebührenrelevanten Informationen zu demgemäss zugeordneten Übertragungskosten erfolgt.

8. Verfahren gemäß zumindest einem der Ansprüche 1-7, **dadurch gekennzeichnet, dass** die Erfassung der gebührenrelevanten Informationen in einem Netzknoten (MSC; VLR; SGSN) des Telekommunikationsnetzes erfolgt, falls sich das übertragene Datenvolumen auf den Schnittstellen (X0_2 und/oder X0_3) nur unwesentlich vom einem netzseitig bereitgestellten Datenvolumen auf Schnittstellen (X2 und/oder X3) unterscheidet, wobei dann die Administration der gebührenrelevanten Funktionen sowie die Übertragung der relevanten Kenngrößen zwischen dem Netzknoten und der Administrationseinrichtung über eine Schnittstelle (X1_1) erfolgt.

## Claims

1. Method for the acquisition of consumer-specific transmission costs in the performance of monitoring measures in packet-oriented telecommunications networks, wherein an administrative authority is provided in the form of an administration function (ADMF), and delivery functions (DF2, DF3) with filter capacity are provided, which undertake transmission of information on the nature and scope of the communication via an interface (X0_2) as well as the content of the communication via an interface (X0_3) to a consumer (LEA),
**characterised in that** in the telecommunications network on the transmission side is disposed a storage table or a database field in the form of a transmission record which can be defined, altered or deleted specifically for the situation by the administration function (ADMF) via an interface (X1_2, X1_3) and within which the information relevant to the charges is, depending on the time of transmission and the transmission volume of each transmission or the start and end times of the transmission, automatically acquired on the part of the transmitting device and assigned to target entries assigned to the appropriate consumers (LEA) as well as to the appropriate administered monitoring measures of telecommunications customers to be monitored, wherein the transmission record can be read in component parts or optionally in its entirety by the administration function or alternatively transmitted there.

2. Method according to claim 1, **characterised in that** the information relevant to the charges is listed specifically for the target according to consumer (LEA) as well as, in secondary order, specifically for the source according to telecommunications customers to be monitored.

3. Method according to claims 1 and 2, **characterised in that** an address present in the transmission device, network address, X.25 or IP address is used as the target criterion.

4. Method according to one or more of claims 1-3, **characterised in that** a network code present in the transmission device for the persons or devices monitored in the form of a telephone number in the fixed-line network or a mobile telephone number MSISDN in a GSM mobile telephone network is used as the source criterion.

5. Method according to one or more of claims 1-4, **characterised in that** a card code IMSI present in the transmission device, of a chip card or subscriber identity module SIM of the persons or devices monitored, is used as the source criterion.

6. Method according to one or more of claims 1-5, **characterised in that** acquisition of the information relevant to the charges is effected within the delivery function components DF2 and DF3.

7. Method according to one or more of claims 1-6, **characterised in that**, irrespective of data acquisition, in the administration function ADMF or a billing function connected thereto, processing of the information specific to the transmission and relevant to the charges into transmission costs which are assigned accordingly is effected.

8. Method according to one or more of claims 1-7, **characterised in that** acquisition of the information relevant to the charges is effected in a network node (MSC; VLR; SGSN) of the telecommunications network in the event that the data volume transmitted at the interfaces (X0_2 and/or X0_3) differs only insignificantly from a data volume provided by the network at interfaces (X2 and/or X3), wherein administration of the functions relevant to the charges and transmission of the relevant characteristic quantities between the network node and the administration function is then effected via an interface (X1_1).

## Revendications

1. Procédé pour saisir des coûts de transmission spécifiques à un demandeur lors de l'exécution de mesures de surveillance dans des réseaux de communication par paquets, étant précisé qu'il est prévu une instance de gestion sous la forme d'un dispositif de gestion (ADMF), et qu'il est prévu des fonctions de fourniture (DF2, DF3) avec une possibilité de filtre qui assurent une transmission, à un consommateur (LEA), d'informations sur le type et l'étendue de la communication par l'intermédiaire d'une interface (X0_2) et sur le contenu de communication par l'intermédiaire d'une interface (X0_3),
**caractérisé en ce qu'**il est prévu dans le réseau de télécommunication, côté transmission, un tableau de stockage ou un champ de base de données sous la forme d'un dossier de transmission qui peut être défini, modifié ou effacé spécifiquement pour chaque situation par le dispositif de gestion (ADMF) par l'intermédiaire d'une interface (X1_2, X1_3) et à l'intérieur duquel les informations relatives à la taxation sont saisies automatiquement du côté du dispositif qui transmet, en fonction du moment de la transmission et du volume de transmission de chaque transmission ou des moments de début et de fin de la transmission, et sont affectées à des inscriptions de destination affectées aux demandeurs (LEA) correspondants et aux mesures de surveillance gérées correspondantes de clients de télécommunication à surveiller, étant précisé que le dossier de transmission peut être lu par parties individuelles ou, à titre optionnel, entièrement par le dispositif de gestion, ou être transmis à celui-ci.

2. Procédé selon la revendication 1, **caractérisé en ce que** les informations relatives à la taxation sont listées de manière spécifique à la destination suivant le demandeur (LEA) et, dans un ordre secondaire, de manière spécifique à la source suivant les clients de télécommunication à surveiller.

3. Procédé selon les revendications 1 et 2, **caractérisé en ce qu'**on utilise comme critère de destination une adresse, une adresse de réseau, une adresse X.25 ou IP présente dans le dispositif de transmission.

4. Procédé selon l'une au moins des revendications 1 à 3, **caractérisé en ce qu'**on utilise comme critère de source une identification de réseau des personnes ou dispositifs surveillés, présente dans le dispositif de transmission sous la forme d'un numéro de téléphone, dans le réseau fixe, ou d'un numéro d'appel mobile MSISDN, dans un réseau de téléphonie mobile GSM.

5. Procédé selon l'une au moins des revendications 1 à 4, **caractérisé en ce qu'**on utilise comme critère de source une identification de carte IMSI, présente dans le dispositif de transmission, d'une carte à puce ou d'un module d'identité d'abonné SIM des personnes ou dispositif surveillés.

6. Procédé selon l'une au moins des revendications 1 à 5, **caractérisé en ce que** la saisie des informations relatives à la taxation se fait à l'intérieur des composants de fonction de fourniture DF2 et DF3.

7. Procédé selon l'une au moins des revendications 1 à 6, **caractérisé en ce que**, indépendamment de la saisie de données, dans le dispositif de gestion ADMF ou dans un dispositif de facturation connecté à celui-ci a lieu un traitement des informations spécifiques à la transmission et relatives à la taxation, concernant des coûts de transmission affectés en conséquence.

8. Procédé selon l'une au moins des revendications 1 à 7, **caractérisé en ce que** la saisie des informations relatives à la taxation a lieu dans un noeud de réseau (MSC ; VLR ; SGSN) du réseau de télécommunication au cas où le volume de données transmis, sur les interfaces (X0_2 et/ou X0_3), ne se distingue que de manière insignifiante d'un volume de données fourni côté réseau, sur les interfaces (X2 et/ou X3), étant précisé que la gestion des fonctions relatives à la taxation et la transmission des grandeurs caractéristiques importantes entre le noeud de réseau et le dispositif de gestion se font par l'intermédiaire d'une interface (X1_1).
